# DEMANDE DE BREVET EUROPEEN

(11) **EP 0 936 426 A1**
(43) Date de publication de la demande: **18.08.1999**
(21) Numéro de dépôt: 99460011.2
(22) Date de dépôt: 12.02.1999
(51) Int. Cl.: F25D 13/06

(54) **Installation pour le refroidissement d'articles intégrant une sole refroidie fixe**

(30) Priorité: 16.02.1998 FR 9802041
(71) Demandeur: CIMS, 72302 Sable-Sur-Sarthe (FR)
(72) Inventeur: Guyomard, Philippe, 60000 Beauvais (FR)
(74) Mandataire: Vidon, Patrice

(57) **Abrégé**

L'invention concerne une installation pour le refroidissement d'articles caractérisée en ce qu'elle comprend au moins une sole refroidie fixe (1) sur laquelle les articles (2) sont en contact direct, des moyens d'amenée (3) desdits articles sur ladite sole refroidie fixe (1) et des moyens (4) de récupération des articles provenant de ladite sole refroidie fixe (1), les articles (2) étant mus sur ladite sole fixe par la seule poussée provoquée par lesdits moyens d'amenée et/ou par la gravité.

## Description

L'invention concerne le domaine des installations de refroidissement, utilisées notamment dans le domaine agro-alimentaire. On notera que l'on entend dans la présente description par le terme "refroidissement", l'abaissement de la température d'un produit en deçà de sa température initiale jusqu'à une température pouvant ou non être négative. Un tel terme couvre notamment la surgélation et la congélation, c'est-à-dire le refroidissement de produits à des températures négatives telles que connues de l'homme de l'art.

Plus précisément, l'invention concerne une installation de refroidissement incluant une sole réfroidie permettant de refroidir très rapidement des articles.

L'invention trouve notamment son application pour :
- "croûter" les produits alimentaires, c'est-à-dire refroidir seulement une ou plusieurs de leurs faces extérieures afin de faciliter leur surgélation ou leur congélation ultérieure ;
- surgeler ou congeler les produits c'est-à-dire les refroidir à coeur.

Dans les installations de croûtage connues de l'état de la technique, seule une couche superficielle d'au moins une des faces du produit est suffisamment refroidie pour figer sa forme et faciliter ainsi sa surgélation ou sa congélation ultérieure, c'est-à-dire son refroidissement à coeur, en lui évitant de coller au support sur lequel il transite lors de cette opération.

On connaît dans l'état de la technique des installations de croûtage comprenant une bande de convoyage sur laquelle transite les produits à croûter à l'intérieur d'une chambre et sur lesquels est projeté un gaz réfrigérant. Une telle installation est notamment décrite dans le brevet américain US-A-5,509,278 (Kiczek).

Une telle technique présente l'inconvénient de nécessiter l'utilisation d'un gaz réfrigérant, ce qui induit des coûts importants de mise en oeuvre et rend plus complexes les installations la mettant en oeuvre.

On connaît également dans l'état de la technique une installation de croûtage dans laquelle les produits à croûter défilent sur un film convoyeur mince en matière plastique glissant en contact avec une sole réfrigérée dans laquelle un réfrigérant à basse température est recyclé en circuit fermé. Dès son contact avec le film convoyeur, le dessous des produits commence à surgeler sur une certaine épaisser (croûter) et la forme du produit se trouve ainsi figée. Grâce à un tel croûtage de la face inférieure du produit, celui-ci est alors suffisamment rigide pour être facilement et rapidement surgelé ou congelé. Ce type d'installation est décrit notamment dans le brevet français FR2693877.

Ce type d'installation de croûtage présente l'inconvénient de mettre en oeuvre un film plastique entre le support réfrigéré et le produit à croûter et donc d'impliquer une perte des frigories effectivement transmises à celui-ci. Le produit à croûter doit donc être en contact avec le film convoyeur pendant un temps plus long que s'il était en contact direct avec la sole réfrigérée.

Pour la surgélation ou la congélation elle-même, les produits à surgeler ou à congeler, préférentiellement préalablement croûtés, transitent dans un tunnel de surgélation ou de congélation où ils sont mis en contact avec un fluide ou un support réfrigéré. On connait dans l'état de la technique de nombreux types de tunnels de surgélation et/ou de congélation.

A titre d'exemple, on peut citer les tunnels dans lesquels les produits à refroidir circulent dans une enceinte, réfrigérée grâce à des circuits de refroidissement, et pourvue d'un tapis sans fin hélicoïdal, tels que décrits dans le brevet français FR2693877 cité ci-dessus. Une telle technique implique la nécessité de refroidir l'ensemble de l'enceinte sans refroidir directement le tapis sans fin. Ce type de tunnel met donc en oeuvre un tapis sans fin qui défile dans une atmosphère refrigérée mais qui ne constitue pas une sole directement refroidie. Le temps nécessaire au refroidissement à coeur du produit est donc plus long.

Dans un autre type d'installation, les produits à refroidir transitent dans un bain de liquide réfrigérant. Ainsi, dans la technique décrite dans le brevet américain US-A-4,361,016 (Multack), les produits à réfrigérer transitent dans de l'eau glacée. Les produits à refroidir sont transportés par une bande convoyeuse souple réalisée en matière plastique et mue par des cylindres rotatifs. Cette bande convoyeuse est munie d'espaceurs, intégrés à la bande convoyeuse, permettant d'éviter aux produits à refroidir de se coller les uns aux autres. La technique décrite dans le brevet américain US-A5,509,277 (Kieczek) met également en oeuvre un passage des produits à réfrigérer dans un bain réfrigérant.

Ces techniques présentent l'inconvénient d'impliquer le passage du produit à congeler dans un liquide, ce qui empêche leur utilisation pour un certains nombres de produits.

Dans la technique décrite dans le brevet américain US-A-4,534,183 (Hashimoto), les produits à refroidir transitent sur un convoyeur en acier dont la surface inférieure est refroidie en permanence par pulvérisation d'un liquide réfrigérant stocké sous le convoyeur, une poche réfrigérée par un liquide et délimitée par une feuille souple qui épouse la forme des produits étant par ailleurs prévue au-dessus des produits pour refroidir la face supérieure de ceux-ci.

Le brevet américain US-A-4,555,914 (Kanto) décrit une technique analogue selon laquelle les produits à refroidir sont transportés dans une enceinte réfrigérée en étant coinçés entre les bandes de deux convoyeurs synchronisés, à savoir un convoyeur inférieur et un convoyeur supérieur, chacune des bandes de convoyage étant refroidie par contact avec un liquide réfrigérant.

Ces techniques présentent quant à elles l'inconvénient de nécessiter des installations complexes à réaliser.

L'objectif de la présente invention est de proposer une technique permettant l'acheminement d'un produit à refroidir par contact direct avec une sole refroidie.

Un autre objectif de la présente invention est de présenter une telle technique qui puisse être facilement mise en oeuvre dans des installations peu complexes à réaliser.

Encore un objectif de la présente invention est de décrire une telle technique qui autorise un refroidissement très rapide des produits.

Ces différents objectifs sont atteints grâce à l'invention qui concerne une installation pour le refroidissement d'articles caractérisée en ce qu'elle comprend au moins une sole refroidie fixe sur laquelle les articles sont en contact direct, des moyens d'amenée desdits articles sur ladite sole refroidie fixe et des moyens de récupération des articles provenant de ladite sole refroidie fixe, les articles étant mus sur ladite sole fixe par la seule poussée provoquée par lesdits moyens d'amenée et/ou par la gravité.

L'installation selon la présente invention se singularise donc par la mise en oeuvre d'une sole refroidie qui présente la particularité d'être fixe tout en recevant directement les articles à refroidir, aucun support (bande convoyage, film convoyeur mince, etc...) n'étant prévu entre cette sole et ces articles. Le déplacement des articles sur cette sole refroidie est effectué grâce aux moyens d'amenée de ceux-ci sur la sole, ceux-ci se trouvant alors poussés les uns par les autres sur la sole refroidie fixe jusqu'aux moyens de récupération et/ou par gravité. Un tel contact direct des articles avec la sole permet de refroidir ceux-ci très rapidement sans pertes de frigories dans un support intermédiaire. De plus, de part sa conception permettant aux articles de cheminer sur la sole sous le seul impact de la poussée procurée par les moyens d'amenée de ceux-ci, l'installation selon la présente invention est simple à réaliser et à mettre en oeuvre.

On comprendra que, de façon à permettre un tel mouvement des articles des moyens d'amenée vers les moyens de récupération, ces articles présenteront avantageusement une certaine rigidité pouvant résulter soit de leur nature même soit de leur température.

Bien que l'on pourra prévoir une sole fixe légèrement inclinée (l'extrêmité de celle-ci recevant les moyens d'amenée étant alors prévue plus haute que l'extrêmité recevant les moyens de récupération des articles) ladite sole refroidie fixe de l'installation selon l'invention est préférentiellement horizontale.

On notera également que la sole de l'installation selon l'invention pourra être plane ou profilée. On pourra ainsi choisir de réaliser une sole profilée pour s'adapter à la forme et/ou à la taille des articles.

Afin d'empêcher auxdits articles de tomber de la sole, celle-ci est par ailleurs avantageusement pourvue de garde-fous latéraux.

Comme précisé ci-dessus, les articles arrivant sur la sole doivent présenter une certaine rigidité de façon à leur permettre de se déplacer sur la sole fixe refroidie sous l'impact des moyens d'amenée. Une telle rigidité pourra avantageusement être obtenue par un refroidissement des articles. C'est la raison pour laquelle, selon une variante préférentielle de l'invention, lesdits moyens d'amenée desdits articles sur ladite sole refroidie fixe sont constitués par un dispositif de refroidissement incluant au moins un tapis de convoyage desdits articles.

Selon une autre variante de l'invention, lesdits moyens de récupération des articles provenant de ladite sole refroidie fixe peuvent également être constitués par un dispositif de refroidissement incluant au moins un tapis de convoyage desdits articles.

De tels dispositifs de refroidissement desdits moyens d'amenée et/ou desdits moyens de récupération pourront notamment comprendre une sole refroidie sur laquelle défile un film mince non réutilisable en matière plastique convoyant lesdits articles, ledit film constituant un tapis de convoyage.

Selon une autre variante, ledit dispositif de refroidissement desdits moyens d'amenée desdits articles sur ladite sole refroidie fixe et/ou desdits moyens de récupération des articles provenant de ladite sole refroidie fixe pourra inclure au moins un tapis de convoyage inférieur et au moins un tapis de convoyage supérieur entre lesquels lesdits articles sont transportés.

Enfin, on notera que préférentiellement, ladite sole fixe est pourvue d'un revêtement de surface favorisant le glissement des articles.

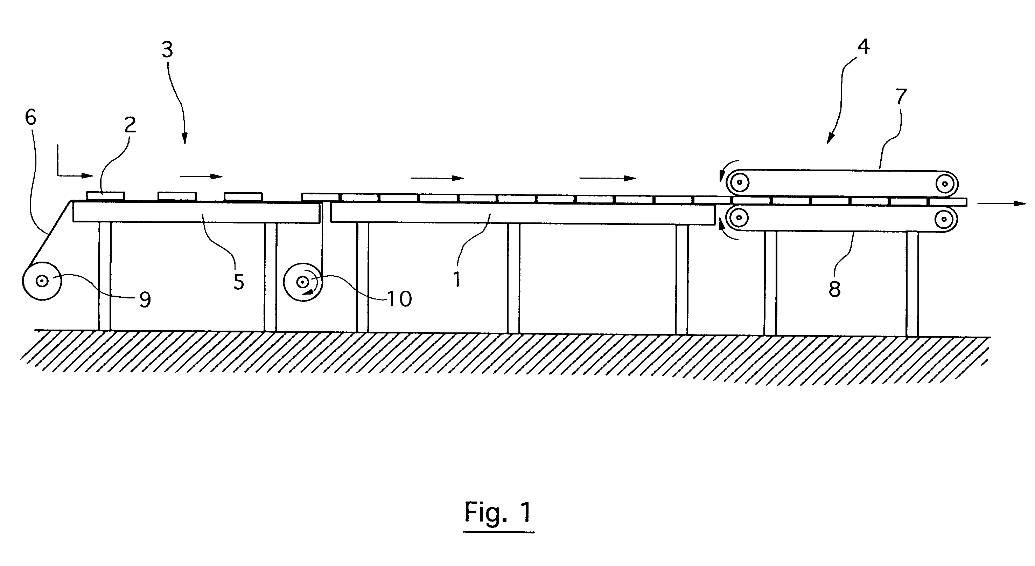

L'invention, ainsi que les différents avantages qu'elle présente seront plus facilement compris grâce à la description qui va suivre d'un mode non limitatif de réalisation de celle-ci en référence à la figure 1 qui représente une vue schématique de côté de ce mode de réalisation.

En référence à la figure 1, le mode de réalisation de l'installation selon l'invention est destiné au croûtage d'articles alimentaires, c'est à dire au refroidissement de leur face inférieure. On notera que sur le mode de réalisation représenté, les articles en question présentent une forme essentiellement parallélépipédique mais que cette forme pourra différer.

L'installation représentée à la figure 1 est essentiellement constituée de trois dispositifs distincts, à savoir :
- une sole 1 horizontale fixe refroidie par un circuit classique de refroidissement (non représenté) ;
- des moyens d'amenée 3 d'articles 2 à refroidir sur la sole refroidie horizontale fixe 1 ; et,
- des moyens de récupération 4 des articles provenant de la sole refroidie 1.

L'ensemble est inclus dans un tunnel de facture classique (non représenté).

Les moyens d'amenée 3 des articles 2 sur la sole 1 sont constitués par un dispositif de refroidissement incluant une sole 5 refroidie par un circuit classique de refroidissement (non représenté) sur laquelle défile un film plastique mince non réutilisable 6 provenant d'un rouleau d'alimentation 9 et récupéré sur un rouleau de récupération 10. Les articles 2 peuvent être chargés sur les moyens d'amenée 3 par un opérateur ou grâce à des moyens mécaniques adéquats. Durant leur passage dans ces moyens d'amenée, les articles 2 ne sont pas en contact direct avec la sole refroidie 5, mais avec le film en matière plastique 6.

Ces moyens d'amenée permettent d'acheminer les articles 2 sur la sole fixe 1 tout en les refroidissant préalablement. Ces articles sont ainsi suffisamment rigides pour leur permettre d'être poussés les uns par les autres sur la sole fixe 1 sous l'impact des moyens d'amenée 3.

La longueur de la sole fixe 1, qui pourra bien sûr varier en fonction des installations, est choisie pour autoriser un contact entre les produits et cette sole pendant un temps suffisamment long et ainsi provoquer un bon refroidissement de la face inférieure des produits. Cette sole est par ailleurs pourvue de garde-fous latéraux (non réprésentés) permettant aux articles 2 d'éviter de tomber de la sole fixe 1.

A leur sortie de la sole fixe refroidie fixe 1, les articles croûtés sont récupérés par les moyens de récupération 4. Ceux-ci sont constitués par deux tapis de convoyage, un tapis de convoyage supérieur 7 et un tapis de convoyage 8 entre lesquels les articles défilent.

Le mode de réalisation de l'invention ici décrit n'a pas pour objet de réduire la portée de celle-ci. Il pourra donc y être apporté de nombreuses modifications sans sortir de son cadre. A ce sujet, on notera que l'installation selon l'invention pourra inclure des moyens permettant de croûter et/ou surgeler la face supérieure des produits, par exemple par ventilation d'air froid à travers des évaporateurs.

## Revendications

1. Installation pour le refroidissement d'articles alimentaires caractérisée en ce qu'elle comprend au moins une sole refroidie fixe (1) sur laquelle les articles (2) sont en contact direct, des moyens d'amenée (3) desdits articles alimentaires sur ladite sole refroidie fixe et des moyens (4) de récupération des articles (2) provenant de ladite sole refroidie fixe (1), les articles étant mus sur ladite sole fixe (1) par la seule poussée provoquée par lesdits moyens d'amenée (3) et/ou par la gravité.

2. Installation selon la revendication 1 caractérisée en ce que ladite sole refroidie fixe (1) est horizontale.

3. Installation selon la revendication 1 caractérisée en ce que ladite sole refroidie fixe (1) est légèrement inclinée.

4. Installation selon l'une quelconque des revendications 1 à 3 caractérisée en ce que ladite sole refroidie fixe (1) est plane.

5. Installation selon l'une quelconque des revendications 1 à 3 caractérisée en ce que ladite sole refroidie fixe (1) est profilée.

6. Installation selon l'une quelconque revendication 1 à 5 caractérisée en ce que ladite sole refroidie fixe (1) est pourvue de garde-fous latéraux.

7. Installation selon l'une quelconque des revendications 1 à 6 caractérisée en ce que lesdits moyens d'amenée (3) desdits articles (2) sur ladite sole refroidie fixe (1) sont constitués par un dispositif de refroidissement incluant au moins un tapis de convoyage desdits articles (2).

8. Installation selon l'une quelconque des revendications 1 à 7 caractérisée en ce que lesdits moyens de récupération (4) des articles provenant de ladite sole réfrigérée fixe (1) sont constitués par un dispositif de réfroidissement incluant au moins un tapis de convoyage desdits articles.

9. Installation selon l'une quelconque des revendications 7 ou 8 caractérisée en ce que ledit dispositif de refroidissement desdits moyens d'amenée desdits articles sur ladite sole refroidie fixe (1) et/ou desdits moyens de récupération des articles provenant de ladite sole refroidie fixe (1) comprend une sole refroidie (5) sur laquelle défile un film mince (6) en matière plastique non réutilisable convoyant lesdits articles.

10. Installation selon l'une quelconque des revendications 7 ou 8 caractérisée en ce que ledit dispositif de refroidissement desdits moyens d'amenée desdits articles sur ladite sole refroidie fixe (1) et/ou desdits moyens de récupération des articles provenant de ladite sole refroidie fixe (1) inclut au moins un tapis de convoyage inférieur (7) et au moins un tapis de convoyage supérieur (8) entre lesquels lesdits articles sont transportés.

11. Installation selon l'une quelconque des revendications 1 à 10 caractérisée en ce que ladite sole fixe (1) est pourvue d'un revêtement de surface favorisant le glissement desdits articles (2).
